# FASCICULE DE BREVET EUROPEEN

(11) **EP 2 382 742 B1**
(45) Date de publication et mention de la délivrance du brevet: **21.11.2012**
(21) Numéro de dépôt: 10700965.6
(22) Date de dépôt: 05.01.2010
(51) Int. Cl.: H04W 12/06, H04L 29/06, H04W 8/18, H04W 48/18

(54) **DISPOSITIF PORTATIF DE COMMUNICATION MULTI-RESEAUX**
TRAGBARES GERÄT ZUR KOMMUNIKATION IN MEHREREN NETZWERKEN
PORTABLE DEVICE FOR MULTI-NETWORK COMMUNICATION

(30) Priorité: 28.01.2009 FR 0950521
(43) Date de publication de la demande: 02.11.2011
(73) Titulaire: Plugnsurf, 92110 Saint Cloud (FR)
(72) Inventeur: REMAUD, David, F-92110 Saint Cloud (FR); LOPEZ, Yann, F-92160 Antony (FR)
(74) Mandataire: Lucas, Laurent Jacques
(86) Numéro de dépôt international: PCT/EP2010/050035
(87) Numéro de publication internationale: WO 2010/086193

(56) Documents cités:
- GB-A- 2 428 942
- US-A1- 2006 075 174
- US-A1- 2006 094 427
- US-A1- 2007 118 609

## Description

L'invention concerne un dispositif portatif de communication multi-réseaux et s'applique notamment aux domaines des télécommunications et de l'électronique.

L'accès au réseau mondial Internet à partir d'un terminal fixe est aujourd'hui courant, et ce à haut débit. Les utilisateurs ont également la possibilité d'accéder à Internet en situation de mobilité à l'aide de terminaux mobiles, par exemple, de leur téléphone portable ou de leur ordinateur portable. Cet accès s'appuie sur un grand nombre de technologies, certaines venant historiquement du monde des télécommunications et d'autres du monde de l'informatique.

Dans la catégorie des technologies venant du monde des télécommunications, l'accès à l'Internet mobile a été rendu possible grâce à l'évolution des normes de deuxième génération, habituellement désignées par le sigle 2.5G, et en premier lieu à la technologie GPRS. Cette technologie a permis, tout en s'appuyant sur la technologie GSM, de réaliser des communications de type « paquet » en situation de mobilité. Les débits de communication proposés n'étant alors pas suffisant pour que les utilisateurs puissent accéder à Internet confortablement, les systèmes de deuxième génération ont évolués vers la technologie E-GPRS. En parallèle de ces évolutions les industriels des télécommunications ont travaillé à la définition des systèmes radio-mobiles de troisième génération, habituellement désignés par le sigle 3G, dont l'UMTS est le représentant le plus connu. Les caractéristiques techniques de ces systèmes, notamment en termes de débits, permettent aujourd'hui d'accéder à l'Internet mobile. Les évolutions de l'UMTS, notamment celles désignées par les sigles 3.5G et 3.75G, permettent encore d'améliorer la perception de l'utilisateur en termes de qualité de service, mais aussi d'augmenter la capacité des réseaux. Pour ce qui est des terminaux mobiles, étant donné qu'il est aujourd'hui habituel qu'un opérateur possède à la fois un réseau d'accès 2G et un réseau d'accès 3G, des mécanismes intelligents dits multimodes sont capables de passer d'une technologie à l'autre. Ces doubles réseaux d'accès sont habituellement qualifiés de réseaux 2G/3G. Plus récemment, la technologie de quatrième génération LTE, acronyme venant de l'expression anglo-saxonne « Long Term Evolution », propose une interface radio à efficacité spectrale améliorée. Cette technologie permet également de réduire les délais de transmission bout en bout et ainsi d'améliorer la qualité de service, notamment concernant les services nécessitant un fonctionnement en temps réel.

Concernant les technologies d'accès sans fil issues du monde de l'informatique et permettant un accès à l'Internet mobile, l'utilisation du Wifi, sigle faisant référence à la technologie décrite dans la norme IEEE 802.11, est aujourd'hui particulièrement répandue, ceci au point que les constructeurs de processeurs pour ordinateurs intègrent quasiment systématiquement un module de communication supportant cette technologie. Par ailleurs, de plus en plus de terminaux autres que les ordinateurs portables intègrent le Wifi, comme par exemples des terminaux GPS, des consoles de jeux et des lecteurs multimédia. La norme IEEE 802.16 décrivant le système WiMax peut être vue comme le successeur de Wifi, en améliorant la gestion de la qualité de service, en proposant des débits de transmission plus important et en permettant une gestion de la mobilité des terminaux. Un example se trouve dans US 2006/0094427.

Aujourd'hui, beaucoup de terminaux supportent le Wifi. Pour accéder à Internet, il faut donc que l'utilisateur et son terminal se trouvent dans une zone couverte par au moins un réseau Wifi. De plus, l'utilisateur doit avoir le droit d'accéder auxdits réseaux. Si ces conditions ne sont pas remplies et que le terminal n'a pas la capacité de se connecter à un réseau sans fil par d'autres moyens, la connexion à Internet est alors impossible.

Des solutions existent dans l'état de la technique et permettent de s'affranchir partiellement des contraintes précitées. Par exemple, il est possible dans certains cas d'utiliser un terminal mobile supportant les technologies 2G/3G et Wifi en tant que point d'accès Wifi pour que d'autres terminaux Wifi puisse accéder à un réseau 2G/3G, l'utilisateur ayant préalablement souscrit un abonnement auprès de l'opérateur propriétaire dudit réseau.

Une autre solution existant permettant d'accéder à l'Internet mobile, notamment à partir d'un ordinateur portable, est d'utiliser une clé USB ayant la capacité de se connecter à un réseau 2G/3G. Ces solutions impliquent habituellement une intervention de l'utilisateur qui doit choisir un réseau parmi ceux détectés et qui doit fournir les informations requises pour la connexion audit réseaux.

Il apparaît que toutes les technologies d'accès sans fil à Internet citées précédemment, et potentiellement d'autres, sont amenées à cohabiter. Chaque technologie a ses propres caractéristiques, notamment en termes de débits, de couverture et de bandes de fréquence, et seule une combinaison de plusieurs, voire de l'ensemble des réseaux les mettant en oeuvre permet un usage véritablement confortable de l'Internet mobile. Par ailleurs, il est difficile de concevoir des terminaux mobiles pouvant supporter l'ensemble de ces technologies. En effet, cela aurait comme conséquences un encombrement excessif, une consommation électrique accrue ainsi qu'un coût de fabrication élevé.

Un but de l'invention est notamment de pallier les inconvénients précités.

A cet effet l'invention a pour objet un dispositif portatif de communication multi-réseaux comprenant au moins deux interfaces, une première interface permettant un échange de données entre au moins un terminal et ledit dispositif, lesdits terminaux étant connectés au dispositif en utilisant au moins un réseau sans fil de type WLAN ou WPAN, une deuxième interface permettant un échange de données entre le dispositif et au moins un réseau sans fil d'accès à Internet.

Le dispositif comporte des moyens pour mémoriser dans une base de données de souscriptions les informations d'identification et d'authentification requises pour se connecter à au moins un réseau sans fil d'accès à Internet ainsi que des informations de tarification des communications. Il comporte aussi des moyens pour détecter la présence des réseaux sans fil d'accès à Internet présents au voisinage du dispositif et pour sélectionner automatiquement au moins un des réseaux sans fil d'accès à Internet détectés en fonction des préférences d'au moins un utilisateur du dispositif, lesdites préférences étant mémorisées dans une base de données de préférences utilisateur et permettant d'allouer un niveau de priorité de sélection aux différents réseaux sans fil d'accès à internet. Il établit une communication entre au moins un terminal et au moins un des réseaux sans fil d'accès à Internet sélectionnés en utilisant les informations de la base de données de souscriptions lorsque celles-ci sont requises.

Selon un aspect de l'invention, le niveau de priorité de sélection est alloué aux différents réseaux sans fil d'accès à internet de manière à minimiser le coût de la communication.

Selon un autre aspect de l'invention, le niveau de priorité de sélection est alloué aux différents réseaux sans fil d'accès à internet de manière à optimiser la qualité de service de la communication.

Les terminaux pouvant se connecter au dispositif en utilisant la première interface peuvent être de plusieurs types parmi lesquels : ordinateur fixe, ordinateur portable, livre électronique, baladeur numérique, téléphone portable, assistant personnel, appareil photo numérique, cadre pour photos numériques, récepteur GPS et console de jeux portable.

Dans un mode de réalisation, la première interface supporte au moins l'un des protocoles de communication décrits dans les normes IEEE 802.11 et IEEE 802.15, IEEE 802.15.4, Home RF, Wireless USB, IR-Simple, Giga-IR, WiGig, WifiDirect.

Dans un mode de réalisation, la deuxième interface supporte au moins l'un des protocoles de communication décrit dans les normes IEEE 802.11, IEEE 802.16, GSM, GPRS, 3GPP E-GPRS, 3GPP UMTS, 3GPP LTE et 3GPP2 CDMA2000.

Le dispositif comporte, par exemple, des moyens pour lire le contenu d'au moins une carte à puce contenant des informations d'identification et d'authentification pour accéder à un réseau sans fil d'accès à Internet. Les cartes à puce sont, par exemple, de type SIM ou USIM.

Selon un mode de mise en oeuvre, le dispositif comporte des moyens pour se connecter à un module externe, ledit module externe permettant d'établir une communication avec au moins un réseau sans fil d'accès à Internet. Ledit dispositif et le module externe sont connectés, par exemple, par technologie USB.

Le dispositif comporte, par exemple, un serveur web, ledit serveur permettant de configurer et de reconfigurer le dispositif à distance en utilisant la première ou la deuxième interface.

Selon un aspect de l'invention, le dispositif comporte un module de gestion des informations géographiques, ledit module comprenant des informations mémorisées indiquant la couverture des réseaux sans fil d'accès à Internet au voisinage du dispositif et comportant des moyens pour estimer la position géographique du dispositif. Le dispositif comprend, par exemple, un module GPS lui permettant d'estimer sa position géographique.

Selon un mode de réalisation, le dispositif comporte des moyens pour afficher au moins un type d'information parmi lesquelles : le coût de communication, le réseau sans fil d'accès Internet sélectionné, la quantité d'information échangée.

Selon un autre aspect de l'invention, le dispositif comporte des moyens pour se connecter à un réseau d'accès filaire.

L'invention a notamment comme avantage de concentrer les modules de connexion aux différentes technologies d'accès dans un seul équipement. Les terminaux se connectant au dispositif selon l'invention n'ont donc à supporter que la technologie d'accès leur permettant de s'y connecter. La difficulté de conception et le coût des différents terminaux s'en trouvent par conséquent réduits.

Une sélection du meilleur réseau au sens des préférences de l'utilisateur est effectuée de manière automatique et transparente pour l'utilisateur, permettant un emploi simple du dispositif par ce dernier.

Par ailleurs, le dispositif selon l'invention permet de partager un abonnement payant, par exemple auprès d'un opérateur 3G, entre plusieurs utilisateurs et ainsi de réduire globalement le coût de connexion à l'Internet mobile.

Un autre avantage concerne le plan de numérotation utilisé pour certains réseaux, 2G/3G notamment. En effet, le terminal doit disposer d'un numéro IMSI, acronyme venant le l'expression anglo-saxonne « International Mobile Subscriber Identity », hors le nombre de ces numéros est limité. En France, par exemple, 99 millions de numéros IMSI sont disponibles. En théorie, chaque Français ne peut connecter qu'un ou deux de ses terminaux à un réseau 2G/3G. La solution proposée dans le cadre de l'invention ne requière qu'un numéro IMSI pour un nombre potentiellement important de terminaux.

D'autres caractéristiques et avantages de l'invention apparaîtront à l'aide de la description qui suit donnée à titre illustratif et non limitatif, faite en regard des dessins annexés parmi lesquels :
- la figure 1 présente un exemple de dispositif de communication multi-réseaux selon l'invention ;
- la figure 2 illustre le principe de sélection de réseau tel que mis en oeuvre par le dispositif ;
- la figure 3 donne un exemple d'algorithme de sélection de réseau.

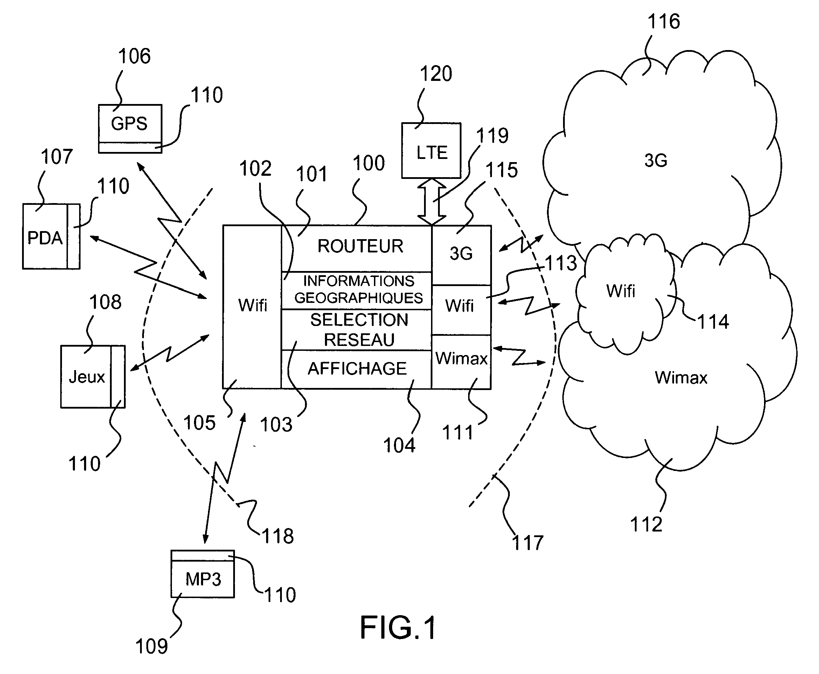

La figure 1 présente un exemple de dispositif de communication multi-réseaux 100 selon l'invention. Dans la suite de la description, l'expression multi-réseaux fait référence au fait que le dispositif est capable d'établir une communication avec des réseaux d'accès de technologies différentes, lesdits réseaux appartenant pouvant appartenir, mais pas nécessairement, à des opérateurs différents. Le dispositif comporte deux types d'interfaces radio. Un premier type d'interface 118 lui permet de se connecter et d'échanger des données avec un ou plusieurs terminaux n'appartenant pas nécessairement au même utilisateur, et ce en utilisant un réseau sans fil local appelé WLAN, acronyme venant de l'expression anglo-saxonne « Wireless Local Access Network » et dont la technologie Wifi décrite dans la norme IEEE 802.11 est un exemple. Cette interface peut être adaptée pour supporter aussi des réseaux de type WPAN, acronyme venant de l'expression anglo-saxonne « Wireless Personnal Access Network » et dont la technologie Bluetooth décrite dans la norme IEEE 802.15 est un exemple. Ladite interface 118 est qualifiée de première interface dans la suite de la description. Des réseaux locaux sans fil se basant, par exemple, sur la technologie Zigbee décrite dans la norme IEEE 802.15.4 ainsi que sur les technologies Home RF, Wireless USB, IR-Simple, Giga-IR, WiGig et WifiDirect, peuvent aussi être utilisés au niveau de la première interface 118.

Un second type d'interface 117 permet au dispositif de se connecter et d'échanger des données au travers d'au moins un réseau sans fil d'accès à Internet. Un réseau sans fil d'accès à Internet désigne, dans le cadre de cette description, un réseau d'accès de type WAN sans fil ou WLAN permettant d'accéder au réseau Internet global. Cette interface est qualifiée de seconde interface dans la suite de la description.

Des exemples de réseaux WAN sans fil supportés par le dispositif sont, par exemples, des réseaux mobiles de types GSM, CSD, CDMA, GPRS, EDGE, CDMA 2000 1-x, W-CDMA, UMTS, FOMA, TD-SCDMA, HSDPA, HSUPA, HC-SDMA, LTE ;

Les réseaux sans-fil supportant les technologies suivantes peuvent être aussi supportés par le dispositif :
- WiMAX ;
- Wifi 802.11 a/b/g/n ;
- WAPI, acronyme venant de l'expression anglo-saxonne « Wireless Authentification Privacy Infrastructure » ;
- WiBro, sigle venant de l'expression anglo-saxonne « Wireless Broadband» ;
- LMDS, acronyme venant de l'expression anglo-saxonne Local Multipoint Distribution Service ;

Des réseaux satellites comme les réseaux DVB-S, acronyme venant de l'expression anglo-saxonne « Digital Video Broadcasting - Satellite », peuvent aussi être supportés.

Concernant la première interface 118, celle-ci permet de connecter plusieurs terminaux au dispositif selon l'invention 100. Ces terminaux peuvent être, par exemples, un terminal GPS 106, un assistant personnel PDA 107, une console de jeux 108 ou bien un lecteur multimédia 109. D'autres types de terminaux, non représentés sur la figure, peuvent se connecter au dispositif, par exemples un livre électronique, un baladeur numérique de type MP3, un téléphone portable, un appareil photo, un cadre pour photos numériques, un ordinateur fixe ou un ordinateur portable. A titre d'exemple, des ordinateurs portables de type Notebook, expression anglo-saxonne faisant référence à un ordinateur portable de petite taille, peuvent se connecter au dispositif. La communication entre ces terminaux et le dispositif est établie au travers d'un réseau WLAN/WPAN. Si le Wifi est utilisé, le dispositif 100 comprend un module 105 permettant de supporter cette technologie et donc de mettre en oeuvre un point d'accès Wifi. La notion de point d'accès dans le cadre de cette invention est définie plus précisément dans la suite de la description. Le réseau privé Wifi ainsi créé est associé à un identifiant de réseau SSID, acronyme venant de l'expression anglo-saxonne «Service Set Identifier » et d'un numéro de canal. D'autre part, chaque terminal 106, 107, 108, 109 possède également un module Wifi 110. Lesdits terminaux sont configurés avec le SSID et le numéro de canal du réseau Wifi ainsi créé.

La sécurité du réseau privé Wifi peut être renforcée en utilisant des techniques de cryptographie, en utilisant par exemple le mode WEP, acronyme venant de l'expression anglo-saxonne « Wired Equivalent Privacy », ou le mode WPA, acronyme venant de l'expression anglo-saxonne « Wifi Protected Access ».

Concernant la seconde interface 117 introduite précédemment, le dispositif comporte une partie modem capable de mesurer et de détecter la présence de signaux sur différentes fréquences associées à différents réseaux sans fil d'accès à Internet, ainsi que pour y transmettre et recevoir des données. Le dispositif de communication comporte, par exemple, un module Wimax 111 lui permettant de se connecter à un réseau 112 supportant cette technologie, un module Wifi 113 lui permettant de se connecter à un réseau 114 supportant cette technologie et un module 3G 115 lui permettant de se connecter à un réseau 116 supportant cette technologie. Le module 3G 115 devra avoir accès aux informations nécessaires à l'indentification et à l'authentification de l'utilisateur. Ainsi le dispositif 100 comprend un lecteur de carte SIM/USIM ou des moyens pour mémoriser les informations associées. Par ailleurs le dispositif est capable de mémoriser des informations permettant la connexion aux réseaux Wifi et Wimax. Une base de données de souscriptions peut être également utilisée pour mémoriser ce type d'informations.

Ces différents modules peuvent, par exemple, utiliser des logiciels mettant en oeuvre les fonctions associées aux protocoles radio et aux protocoles de liaison de données. Une conception modulaire du dispositif permet, par exemple, d'ajouter un nouveau module à l'architecture dans le but de supporter une nouvelle technologie. Ainsi, le dispositif peut comporter, par exemple, un port USB 119 lui permettant d'ajouter un modem externe. Ainsi, si la technologie LTE est déployée, l'utilisateur du dispositif pourra, par exemple, y connecter un second dispositif comportant un modem LTE 120.

La commutation de paquets d'une interface vers une autre est réalisée à l'aide d'un module de routage 101. Celui-ci correspond, par exemple, à un serveur DHCP, acronyme venant de l'expression anglo-saxonne «Dynamic Host Configuration Protocol ».

Un serveur web accessible du réseau local Wifi peut également être mis en oeuvre de manière à ce que le dispositif puisse être configuré à distance.

Le dispositif de communication comprend un module de gestion des informations géographiques 102. La localisation du dispositif est effectuée à l'aide, par exemple, d'un module GPS non représenté sur la figure 1 et intégré au dispositif. Des informations géographiques de couverture mémorisées par le dispositif permettent de prédire quels sont les réseaux disponibles et la qualité de la couverture. Ainsi, la manière dont la sélection de réseau 103 est effectuée peut être simplifiée.

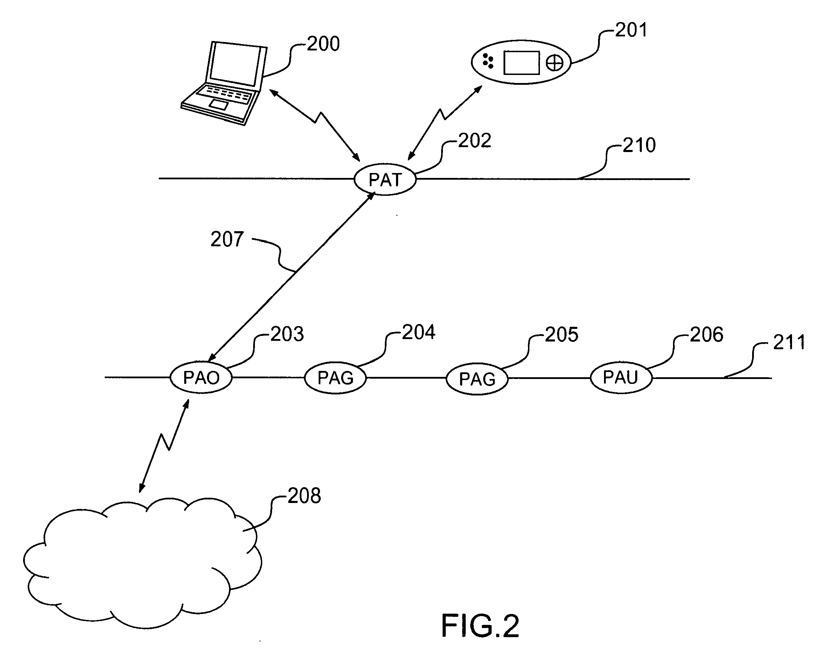

Lorsque plusieurs réseaux sans fil d'accès à Internet sont détectés, un module de sélection 103 permet de choisir le meilleur réseau au sens des préférences de l'utilisateur. Les préférences d'un utilisateur sont définies comme étant l'ensemble des paramètres permettant au dispositif de se configurer et de fonctionner tel que désiré par l'utilisateur. Les préférences sont mémorisées dans le dispositif et peuvent être mises à jour par l'utilisateur par reconfiguration dudit dispositif. Un exemple de préférence utilisateur peut être par exemple un paramètre indiquant que la sélection de réseau doit être effectuée de manière à minimiser le coût de communication, ou bien à optimiser la qualité de communication. Ces paramètres sont mémorisés, par exemple, dans une base de donnée de préférences utilisateurs comprise dans le dispositif, ces exemples n'étant pas limitatifs. Le principe de la sélection de réseau est explicité plus loin dans la description à l'aide de l'exemple de la figure 2.

Ainsi, une deuxième base de données peut être comprise dans le dispositif afin de mémoriser les informations permettant de se connecter aux réseaux sans fil d'accès à Internet pouvant être sélectionnés. Cette base de données est appelée dans la suite de la description base de données de souscriptions. Les données contenues sont, par exemples, le SSID et la clé WEP pour l'accès à un réseau Wifi. Dans le cas d'un réseau 3G, le numéro IMSI et le code PIN pourront être notamment mémorisés dans cette base. Les terminaux se connectant au dispositif n'ont donc à être configurés qu'une seule fois de manière à accéder au réseau WLAN ou WPAN de la première interface pour pouvoir accéder à l'internet sans fil. L'accès à l'Internet est rendu accessible au terminal par la possibilité de se connecter à une pluralité de réseaux sans fil d'accès à internet, le dispositif selon l'invention servant de passerelle entre ledit terminal et lesdits réseaux sans fil d'accès à internet. Les étapes d'indentification et d'authentification sont transparentes pour le ou les utilisateurs du dispositif grâce à la base de données de souscriptions.

Le dispositif selon l'invention est portatif. Par conséquent, il comprend une batterie lui permettant de fonctionner de manière autonome. Le dispositif a notamment comme avantage de fournir une connexion à Internet à l'endroit où se trouve l'utilisateur tout en sélectionnant le meilleur réseau d'accès sans fil à Internet au sens des préférences utilisateur.

Par ailleurs, le fait que le dispositif agisse comme une passerelle de communication entre au moins un terminal et au moins un réseau d'accès sans fil à internet permet qu'un abonnement auprès d'un opérateur, 3G par exemple, puisse être partagé entre une pluralité d'utilisateurs.

L'utilisateur peut notamment sélectionner un mode de fonctionnement du dispositif. L'utilisateur peut forcer l'utilisation d'un type de réseau sans fil d'accès à Internet, à savoir un réseau 3G, Wifi ou Wimax. Pour cela, un bouton de sélection accessible par l'utilisateur lui permet d'effectuer ladite sélection. Le même bouton permet également de sélectionner un mode de sélection automatique de réseau. L'utilisateur pourra par exemple, en appuyant plusieurs fois sur le même bouton, sélectionner successivement plusieurs modes : mode recherche automatique, mode utilisation forcée de la 3G, mode utilisation forcée de Wimax, mode utilisation forcée de Wifi.

Des informations concernant le choix du réseau, la quantité d'informations échangée, la facturation ou l'autonomie du dispositif peuvent être affichées 104 à l'aide, par exemple, de diodes électroluminescentes ou d'un écran. Pour ce qui concerne l'exemple des diodes, si le dispositif n'a pas détecté de réseau, une diode électroluminescente indiquant qu'une recherche automatique de réseau est en cours clignote. Si l'utilisation d'un type de réseau sans fil d'accès à Internet a été forcée par l'utilisateur, mais qu'aucun réseau n'est détecté, une diode électroluminescente clignote, ladite diode correspondant audit type de réseau d'accès. Lorsque qu'un réseau est trouvé et utilisable, les diodes cessent de clignoter.

D'autres diodes électroluminescentes peuvent être utilisées afin d'indiquer si la connexion est gratuite. Un niveau de coût peut également être affiché à l'aide, par exemple, d'un groupe de K diodes. Plus le nombre de diodes allumées parmi ces K diodes est important, plus le coût de la connexion est élevé. D'autres diodes peuvent être utilisées pour indiquer, par exemple, le niveau de qualité de la connexion en cours.

Le dispositif de communication selon l'invention se connecte ainsi aux différents réseaux d'accès, sélectionne le meilleur au sens des préférences utilisateur et sert de passerelle Internet pour les différents terminaux qui y sont connectés.

La figure 2 illustre le principe de sélection de réseau tel que mis en oeuvre par le dispositif. Le dispositif établit plusieurs points d'accès sur chacune des interfaces décrites précédemment.

Au moins un point d'accès peut être configuré au niveau de la première interface du dispositif, c'est-à-dire l'interface permettant de connecter au moins un terminal au dispositif à l'aide d'un réseau local sans fil. Ce type de point d'accès est appelé dans la suite de la description point d'accès terminaux PAT. Si le réseau privé mis en place utilise la technologie Wifi, il y aura alors un PAT Wifi. Il y a un PAT par technologie d'accès supportée. Ainsi, si la technologie Bluetooth est supportée, il aura dans ce cas un second PAT. De plus, plusieurs terminaux peuvent se connecter au dispositif selon l'invention en utilisant le même PAT.

D'autre part, plusieurs points d'accès peuvent être configurés au niveau de la seconde interface du dispositif, c'est-à-dire l'interface permettant de connecter le dispositif à au moins un réseau sans fil d'accès à Internet. Plusieurs types de point d'accès peuvent être détectés sur la seconde interface. Certains points d'accès sont associés à un réseau WLAN donné alors que d'autres sont associés à un réseau WAN sans fil donné.

Des protocoles permettant d'authentifier les points d'accès peuvent être avantageusement mis en oeuvre. Par exemple, le protocole Wispr peut être utilisé afin notamment d'authentifier les points d'accès Wifi.

Concernant les points d'accès associés à des réseaux sans fil d'accès Internet, il est possible d'en distinguer au moins trois types.

Des points d'accès ouvert PAO sont associés à des réseaux WLAN ouverts à tous. Les réseaux associés à un PAO ne nécessitent pas d'identification de la part de l'utilisateur, même si un code d'accès peut être parfois demandé. L'accès est gratuit pour tous et permet un accès Internet sans authentification.

Des points d'accès commerciaux PAC permettent également l'accès à un réseau WLAN mais requièrent l'indentification et l'authentification de l'utilisateur selon les caractéristiques du réseau WLAN. Un PAC est un point d'accès à un réseau appartenant à un opérateur auprès duquel l'utilisateur a souscrit un abonnement, ledit abonnement pouvant être payant ou gratuit.

Il est également possible, toujours au niveau de la seconde interface, de mettre en place un type de point d'accès appelé point d'accès utilisateur PAU. Le dispositif multi-réseaux selon l'invention peut communiquer grâce à un PAU avec un dispositif de communication fixe permettant un accès Internet. Ce dispositif comprend par exemple, un modem filaire ADSL ainsi que des moyens de communication Wifi lui permettant de se connecter au dispositif selon l'invention.

Des points d'accès globaux PAG permettent au dispositif selon l'invention d'échanger des données avec des réseaux WAN sans fil, par exemples un réseau 3G ou un réseau Wimax. Pour que ce type de point d'accès soit mis en place, l'utilisateur doit être identifié et authentifié.

Pour résumer les différents types de point d'accès de la seconde interface, les PAO, PAC et PAU permettent un accès aux réseaux WLAN qui leurs sont associés et les PAG permettent un accès aux WAN sans fil qui leurs sont associés.

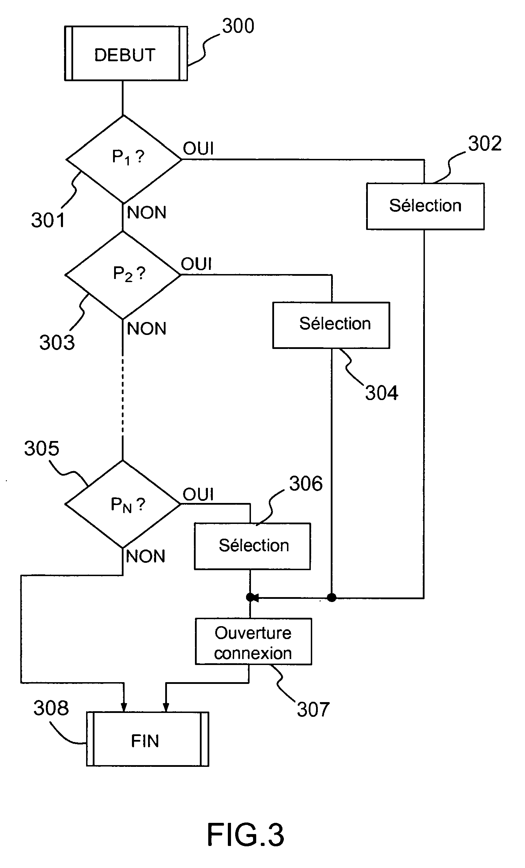

L'exemple de la figure 2 montre que le dispositif multi-réseaux selon l'invention a pu détecter quatre réseaux d'accès au niveau de la seconde interface et donc paramétrer quatre points d'accès. Pour ce qui est de la première interface 210, un point d'accès PAT 202 permet de faire communiquer, par exemple, un ordinateur portable 200 et un terminal multimédia 201 avec le dispositif de communication multi-réseaux. Au niveau de la seconde interface, quatre réseaux de communication permettant un accès Internet sans fil ont été détectés par le dispositif et par conséquent, quatre points d'accès sont disponibles, soit un point d'accès PAO 203, deux points d'accès PAG 204, 205 et un point d'accès PAU 206. Le dispositif multi-réseaux doit mettre en oeuvre un aiguillage 207 des flux de signalisation et de données entre le point d'accès de la première interface 210 et au moins un point d'accès de la seconde interface 211. Cet aiguillage peut être forcé suite à une décision de l'utilisateur ou automatique. L'exemple de la figure vise à illustrer le mode de sélection automatique de réseau. Dans cet exemple, l'algorithme de sélection mis en oeuvre par le dispositif a choisi de relier 207 le point d'accès PAT 202 au point d'accès PAO 203. L'accès Internet est donc réalisé en s'appuyant sur le réseau d'accès 208 associé au point d'accès PAO 203. Cette sélection de réseau d'accès peut être effectuée en utilisant différents critères dont des exemples sont donnés dans la suite de la description à l'aide de la figure 3.

L'utilisateur peut choisir un mode de sélection automatique de réseau. Par exemple, un mode de sélection automatique peut privilégier le ou les réseaux proposant la connexion la moins couteuse alors qu'un autre mode de sélection automatique peut privilégier le ou les réseaux capables de fournir la meilleure qualité de service, désignée habituellement par l'acronyme QoS venant de l'expression anglo-saxonne « Quality of Service ».

La figure 3 donne un exemple d'algorithme de sélection de réseau mis en oeuvre par l'invention.

Les différents types de points d'accès sont associés à une priorité. Quatre types de points d'accès ont été donnés en exemple précédemment, mais cette classification peut être plus fine, en tenant compte du mode de facturation et de la qualité de service. Ainsi, N niveaux de priorités décroissants sont définis notés de P₁ à P_{N}. Cette priorité peut changer en fonction du mode de fonctionnement de l'algorithme choisi. A titre d'exemple, un mode de sélection automatique privilégiant les points d'accès les moins couteux est décrit ci-après.

Le prix d'une connexion est le prix que l'utilisateur doit payer pour accéder à ladite connexion. L'accès à une connexion d'un réseau sans fil peut être gratuit. Celui-ci peut aussi être illimité, c'est-à-dire que l'utilisateur règle une somme d'argent à un opérateur lui permettant un accès illimité à son réseau. L'accès peut également être facturé en fonction de l'utilisation de la connexion. Ainsi la facturation peut dépendre du temps de connexion, du volume de données échangé ou bien du type de service. Ces informations concernant la tarification sont mémorisées, par exemple, dans la base de données de souscriptions décrite précédemment.

Un exemple de mode de sélection automatique de réseau est de choisir le point d'accès permettant un accès Internet le moins couteux possible. Un niveau de priorité de sélection peut être associé à chaque type de point d'accès de la deuxième interface. A titre d'exemple, un point d'accès PAU est de priorité P₁, un point d'accès PAC est de priorité P₂, un point d'accès PAO est de priorité P₃ et un point d'accès PAG sont de priorité est de priorité P₄.

L'algorithme de sélection de réseau peut être appliqué au démarrage du dispositif, suite à une perte de connexion, ou lors d'une mise à jour des préférences utilisateur. Il peut être également appliqué lorsqu'une valeur seuil prédéfinie est atteinte. Par exemple, si pour un abonnement pour l'accès à un réseau 3G, la quantité de données téléchargeables gratuitement est de 10 Mégaoctets et que cette valeur est atteinte, la priorité du point d'accès correspondant est modifiée et l'algorithme de sélection est appliqué une nouvelle fois. Suivant le même principe, l'algorithme peut également être appliqué suite à une mise à jour du coût associé à une connexion donnée.

Par ailleurs, celui-ci peut être exécuté périodiquement ou bien en tenant compte de la localisation de l'utilisateur. Par exemple, le dispositif peut contenir une cartographie de la couverture des différents réseaux d'accès supportés et croiser ces informations avec la position estimée du dispositif. Dans ce cas, la sélection de réseau peut être simplifiée. Lorsque l'exécution de l'algorithme est déclenchée 300, il est vérifié qu'au moins un point d'accès de priorité P₁ est disponible 301. Si c'est le cas, le meilleurs de ces réseaux en terme de qualité de connexion est sélectionné 302, l'aiguillage des données de et vers le point d'accès sélectionné est réalisé et la connexion est ouverte 307 en utilisant si nécessaire les informations de la base de données de souscriptions, comme par exemple un identifiant et un mot de passe. Ensuite, la sélection de réseau se termine 308. Si aucun réseau de priorité P₁ n'est détecté, l'algorithme vérifie si au moins un réseau de priorité P₂ est détecté 303. Si c'est le cas, le meilleurs de ces réseaux en terme de qualité de connexion est sélectionné 304, l'aiguillage des données de et vers le point d'accès sélectionné est réalisé, une connexion est ouverte 307 et la sélection de réseau se termine 308. Ces étapes sont répétées jusqu'à ce qu'un réseau soit sélectionné, et ce jusqu'à la priorité la plus basse P_{N} 305, 306.

La qualité d'une connexion abordée précédemment peut être évaluée en étudiant différents paramètres. Par exemple, la technologie utilisée pour un réseau sans fil d'accès à Internet donné permet d'associer une valeur moyenne et une valeur pic du débit atteignable pour une connexion donnée. A titre d'exemple, une cellule HSDPA d'un réseau 3G+ aura un débit pic de 14 Mbps sur la voie descendante pour une bande de fréquence de 5 MHz.

Une estimation de la qualité du lien radio peut également être utilisée pour cette évaluation. Par exemple, des mesures de qualité radio propres à chaque réseau peuvent être utilisées. La qualité du lien radio influence notamment le débit réel et le temps de réponse que peut proposer une connexion donnée.

L'identification du type de terminal connecté au dispositif au niveau de la première interface peut également être utilisée. En effet, différent types de terminaux ont des besoins et des usages différents en terme d'accès à Internet. A titre d'exemple, un appareil photo aura besoin de débit pour recevoir ou transférer du contenu, mais sera peut sensible au délai de transmission. A contrario, un console de jeu aura besoin d'une connexion lui permettant de mettre en place une communication de données de signalisation en temps réel, et par conséquent avec de fortes contraintes en terme de temps de retard et de gigue de délais.

Le type de services utilisé par un terminal connecté au dispositif au niveau de la première interface peut également être utilisé.

Un mode de sélection automatique de réseau ayant pour but de minimiser le prix de connexion a été explicité précédemment. Un second mode possible permet de privilégier la qualité de la connexion, notamment au sens des critères prédéfinis ci-dessus. Dans ce cas, les priorités P₁ à P_{N} seront différentes pour chacun des points d'accès.

Le dispositif choisit donc le réseau le plus adapté aux critères de l'utilisateur. La mobilité du dispositif permet notamment un accès Internet en voiture mais aussi au restaurant ou dans un lieu public.

Une sélection automatique de réseau basé sur la qualité pourra être utile pour un utilisateur voyageant en train. Le dispositif se connectera, par exemple, en 3G lorsque le train est en mouvement et sera en Wifi avec un meilleur confort et un meilleur prix lorsque le train se trouvera en gare.

Par ailleurs, si aucun réseau sans fil n'est détecté, le dispositif peut contenir des éléments lui permettant de se connecter à un ou plusieurs réseaux filaires. A titre d'exemple, si un voyageur se trouve dans sa chambre d'hôtel et qu'aucun réseau sans fil n'est détecté, le dispositif peut être utilisé pour établir une connexion à un réseau WAN ou LAN filaire. Le dispositif comporte par exemple un modem 56k ou un modem Ethernet. Le dispositif peut aussi comporter un module lui permettant de se connecter à un ordinateur personnel par Ethernet.

## Revendications

1. Dispositif portatif de communication multi-réseaux (100) comprenant au moins deux interfaces (117, 118), une première interface (118) permettant un échange de données entre au moins un terminal (106, 107, 108, 109) et ledit dispositif, lesdits terminaux étant connectés au dispositif en utilisant au moins un réseau sans fil de type WLAN ou WPAN, une deuxième interface (117) permettant un échange de données entre le dispositif et au moins un réseau sans fil d'accès à Internet (112, 114, 116), ledit dispositif étant **caractérisé en ce qu'**il comporte des moyens pour :
- mémoriser dans une base de données de souscriptions les informations d'identification et d'authentification requises pour se connecter à au moins un réseau sans fil d'accès à Internet (112, 114, 116) ainsi que des informations de tarification des communications ;
- détecter la présence des réseaux sans fil d'accès à Internet présents au voisinage du dispositif (112, 114, 116) ;
- sélectionner automatiquement (103) au moins un des réseaux sans fil d'accès à Internet détectés en fonction des préférences d'au moins un utilisateur du dispositif, lesdites préférences étant mémorisées dans une base de données de préférences utilisateur et permettant d'allouer un niveau de priorité de sélection (P₁, P₂, ..., P_{N}) aux différents réseaux sans fil d'accès à internet ;
- établir une communication entre au moins un terminal (106, 107, 108, 109) et au moins un des réseaux sans fil d'accès à Internet (112, 114, 116) sélectionnés en utilisant les informations de la base de données de souscriptions lorsque celles-ci sont requises.

2. Dispositif de communication selon la revendication 1 **caractérisé en ce que** le niveau de priorité de sélection (P₁, P₂, ..., P_{N}) est alloué aux différents réseaux sans fil d'accès à internet de manière à minimiser le coût de la communication.

3. Dispositif de communication selon l'une quelconque des revendications 1 ou 2 **caractérisé en ce que** le niveau de priorité de sélection (P₁, P₂, ..., P_{N}) est alloué aux différents réseaux sans fil d'accès à internet de manière à optimiser la qualité de service de la communication.

4. Dispositif de communication selon l'une quelconque des revendications précédentes **caractérisé en ce que** les terminaux pouvant se connecter audit dispositif (100) en utilisant la première interface (118) sont de plusieurs types parmi lesquels : ordinateur fixe, ordinateur portable, livre électronique, baladeur numérique (109), téléphone portable, assistant personnel (107), appareil photo numérique, cadre pour photos numériques, récepteur GPS (106) et console de jeux portable (108).

5. Dispositif de communication selon l'une quelconque des revendications précédentes **caractérisé en ce que** la première interface supporte au moins l'un des protocoles de communication décrits dans les normes IEEE 802.11 et IEEE 802.15, IEEE 802.15.4, Home RF, Wireless USB, IR-Simple, Giga-IR, WiGig, WifiDirect.

6. Dispositif de communication selon l'une quelconque des revendications précédentes **caractérisé en ce que** la deuxième interface supporte au moins l'un des protocoles de communication décrit dans les normes IEEE 802.11 (113, 114), IEEE 802.16 (111, 112), GSM, GPRS, 3GPP E-GPRS, 3GPP UMTS (115, 116), 3GPP LTE et 3GPP2 CDMA2000.

7. Dispositif de communication selon l'une quelconque des revendications précédentes **caractérisé en ce qu'**il comporte des moyens pour lire le contenu d'au moins une carte à puce contenant des informations d'identification et d'authentification pour accéder à un réseau sans fil d'accès à Internet.

8. Dispositif de communication selon la revendication 7 **caractérisé en ce que** les cartes à puce sont de type SIM ou USIM.

9. Dispositif de communication selon l'une quelconque des revendications précédentes **caractérisé en ce qu'**il comporte des moyens pour se connecter (119) à un module externe (120), ledit module externe permettant d'établir une communication avec au moins un réseaux sans fil d'accès à Internet.

10. Dispositif de communication selon la revendication 9 **caractérisé en ce que** ledit dispositif (100) et le module externe (120) sont connectés (119) par technologie USB.

11. Dispositif de communication selon l'une quelconque des revendications précédentes **caractérisé en ce qu'**il comporte un serveur web, ledit serveur permettant de configurer et de reconfigurer le dispositif à distance en utilisant la première (118) ou la deuxième (117) interface.

12. Dispositif de communication selon l'une quelconque des revendications précédentes **caractérisé en ce qu'**il comporte un module de gestion des informations géographiques (102), ledit module comprenant des informations mémorisées indiquant la couverture des réseaux sans fil d'accès à Internet au voisinage du dispositif et comportant des moyens pour estimer la position géographique du dispositif ;.

13. Dispositif de communication selon la revendication 12 **caractérisé en ce qu'**il comprend un module GPS lui permettant d'estimer sa position géographique.

14. Dispositif de communication selon l'une quelconque des revendications précédentes **caractérisé en ce qu'**il comporte des moyens pour afficher (104) au moins un type d'information parmi lesquelles : le coût de communication, le réseau sans fil d'accès Internet sélectionné, la quantité d'information échangée.

15. Dispositif de communication selon l'une quelconque des revendications précédentes **caractérisé en ce qu'**il comporte des moyens pour se connecter à un réseau d'accès filaire.

## Claims

1. A portable device for multi-network communication (100), comprising at least two interfaces (117, 118), a first interface (118) allowing data to be exchanged between at least one terminal (106, 107, 108, 109) and said device, said terminals being connected to said device using at least one wireless network of the WLAN or WPAN type, a second interface (117) allowing data to be exchanged between said device and at least one wireless Internet access network (112, 114, 116), said device being **characterised in that** it comprises means for:
- storing in a subscriptions database the identification and authentication information that is required to connect to at least one wireless Internet access network (112, 114, 116), as well as communication pricing information;
- detecting the presence of wireless Internet access networks present in the vicinity of the device (112, 114, 116);
- automatically selecting (103) at least one of the detected wireless Internet access networks as a function of the preferences of at least one user of said device, said preferences being stored in a user preferences database and allowing a selection priority level (P₁, P₂, ..., P_{N}) to be assigned to the various wireless Internet access networks;
- establishing communication between at least one terminal (106, 107, 108, 109) and at least one of the wireless Internet access networks (112, 114, 116) selected using the information from the subscriptions database when this is required.

2. The communication device according to claim 1, **characterised in that** the selection priority level (P₁, P₂, ..., P_{N}) is assigned to the various wireless Internet access networks so as to minimise the cost of the communication.

3. The communication device according to claim 1 or 2, **characterised in that** the selection priority level (P₁, P₂, ..., P_{N}) is assigned to the various wireless Internet access networks so as to optimise the service quality of the communication.

4. The communication device according to any one of the preceding claims, **characterised in that** there are several types of terminals that can connect to said device (100) using the first interface (118), which terminals include: desktop computers, laptop computers, electronic books, digital players (109), mobile telephones, personal digital assistants (107), digital cameras, digital photo frames, GPS receivers (106) and portable game consoles (108).

5. The communication device according to any one of the preceding claims, **characterised in that** the first interface supports at least one of the communication protocols described in standards IEEE 802.11 and IEEE 802.15, IEEE 802.15.4, Home RF, Wireless USB, IR-Simple, Giga-IR, WiGig, WifiDirect.

6. The communication device according to any one of the preceding claims, **characterised in that** the second interface supports at least one of the communication protocols described in standards IEEE 802.11 (113, 114), IEEE 802.16 (111, 112), GSM, GPRS, 3GPP E-GPRS, 3GPP UMTS (115, 116), 3GPP LTE and 3GPP2 CDMA2000.

7. The communication device according to any one of the preceding claims, **characterised in that** it comprises means for reading the content of at least one smart card that contains identification and authentication information for accessing a wireless Internet access network.

8. The communication device according to claim 7, **characterised in that** the smart cards are of the SIM or USIM type.

9. The communication device according to any one of the preceding claims, **characterised in that** it comprises means (119) for connecting to an external module (120), said external module allowing communication to be established with at least one wireless Internet access network.

10. The communication device according to claim 9, **characterised in that** said device (100) and said external module (120) are connected (119) using USB technology.

11. The communication device according to any one of the preceding claims, **characterised in that** it comprises a web server, said server allowing said device to be remotely configured and reconfigured using the first (118) or the second (117) interface.

12. The communication device according to any one of the preceding claims, **characterised in that** it comprises a geographical information management module (102), said module comprising stored information that indicates the coverage of the wireless Internet access networks in the vicinity of the device and comprising means for estimating the geographical position of said device.

13. The communication device according to claim 12, **characterised in that** it comprises a GPS module that allows it to estimate its geographical position.

14. The communication device according to any one of the preceding claims, **characterised in that** it comprises means (104) for displaying at least one type of information from among the following: the communication cost, the selected wireless Internet access network and the quantity of exchanged information.

15. The communication device according to any one of the preceding claims, **characterised in that** it comprises means for connecting to a wired access network.

## Patentansprüche

1. Tragbares Gerät für die Kommunikation (100) in mehreren Netzwerken, das wenigstens zwei Schnittstellen (117, 118) umfasst, wobei eine erste Schnittstelle (118) den Austausch von Daten zwischen wenigstens einem Endgerät (106, 107, 108, 109) und dem Gerät zulässt, wobei die Endgeräte mit dem Gerät über wenigstens ein drahtloses Netzwerk des WLAN- oder WPAN-Typs verbunden sind, wobei eine zweite Schnittstelle (117) den Austausch von Daten zwischen dem Gerät und wenigstens einem drahtlosen Internetzugangsnetz (112, 114, 116) zulässt, wobei das Gerät **dadurch gekennzeichnet ist, dass** es Mittel umfasst zum:
- Speichern, in einer Abonnementdatenbank, der Identifikations- und Authentifikationsinformationen, die für den Anschluss an wenigstens ein drahtloses Internetzugangsnetz (112, 114, 116) nötig sind, sowie von Kommunikationsgebühreninformationen;
- Erkennen der Anwesenheit von drahtlosen Internetzugangsnetzen, die in der Nähe des Gerätes (112, 114, 116) vorhanden sind;
- automatischen Auswählen (103) von wenigstens einem der erkannten drahtlosen Internetzugangsnetze in Abhängigkeit von den Präferenzen von wenigstens einem Benutzer des Gerätes, wobei die Präferenzen in einer Benutzerpräferenzen-Datenbank gespeichert sind und die Zuordnung einer Auswahlprioritätsstufe (P₁, P₂, ..., P_{N}) zu den verschiedenen drahtlosen Internetzugangsnetzen zulässt;
- Aufbauen einer Kommunikation zwischen wenigstens einem Endgerät (106, 107, 108, 109) und wenigstens einem der drahtlosen Internetzugangsnetze (112, 114, 116), die anhand der Informationen von der Teilnehmerdatenbank ausgewählt wurden, wenn dies erforderlich ist.

2. Kommunikationsgerät nach Anspruch 1, **dadurch gekennzeichnet, dass** die Auswahlprioritätsstufe (P₁, P₂, ..., P_{N}) den verschiedenen drahtlosen Internetzugangsnetzen so zugeordnet wird, dass die Kosten für die Kommunikation minimiert werden.

3. Kommunikationsgerät nach Anspruch 1 oder 2, **dadurch gekennzeichnet, dass** die Auswahlprioritätsstufe (P₁, P₂, ..., P_{N}) den verschiedenen drahtlosen Internetzugangsnetzen zugeordnet wird, um die Dienstequalität der Kommunikation zu optimieren.

4. Kommunikationsgerät nach einem der vorherigen Ansprüche, **dadurch gekennzeichnet, dass** die Endgeräte, die über die erste Schnittstelle (118) mit dem Gerät (100) verbunden werden können, von mehreren Typen sind, wie z.B.: Desktop-Computer, Laptop-Computer, elektronische Bücher, Digital-Players (109), Mobiltelefone, Personal Digital Assistants (107), Digitalkameras, digitale Fotorahmen, GPS-Empfänger (106) und tragbare Spielekonsolen (108).

5. Kommunikationsgerät nach einem der vorherigen Anspruche, **dadurch gekennzeichnet, dass** die erste Schnittstelle wenigstens eines der Kommunikationsprotokolle unterstützt, die in den Standards IEEE 802.11 und IEEE 802.15, IEEE 802.15.4, Home RF, Wireless USB, IR-Simple, Giga-IR, WiGig, WifiDirect beschrieben sind.

6. Kommunikationsgerät nach einem der vorherigen Ansprüche, **dadurch gekennzeichnet, dass** die zweite Schnittstelle wenigstens eines der Kommunikationsprotokolle unterstützt, die in den Standards IEEE 802.11 (113, 114), IEEE 802.16 (111, 112), GSM, GPRS, 3GPP E-GPRS, 3GPP UMTS (115, 116), 3GPP LTE und 3GPP2 CDMA2000 beschrieben sind.

7. Kommunikationsgerät nach einem der vorherigen Ansprüche, **dadurch gekennzeichnet, dass** es Mittel zum Lesen des Inhalts von wenigstens einer Chipkarte umfasst, die Identifikations- und Authentifikationsinformationen zum Zugreifen auf ein drahtloses Internetzugangsnetz enthält.

8. Kommunikationsgerät nach Anspruch 7, **dadurch gekennzeichnet, dass** die Chipkarten vom SIM- oder vom USIM-Typ sind.

9. Kommunikationsgerät nach einem der vorherigen Ansprüche, **dadurch gekennzeichnet, dass** es Mittel (119) zum Verbinden mit einem externen Modul (120) umfasst, wobei das externe Modul den Aufbau einer Kommunikation mit wenigstens einem drahtlosen Internetzugangsnetz zulässt.

10. Kommunikationsgerät nach Anspruch 9, **dadurch gekennzeichnet, dass** das Gerät (100) und das externe Modul (120) mit USB-Technologie miteinander verbunden sind (119).

11. Kommunikationsgerät nach einem der vorherigen Ansprüche, **dadurch gekennzeichnet, dass** es einen Webserver umfasst, wobei der Server eine Fernkonfiguration und -umkonfiguration des Geräts über die erste (118) oder die zweite (117) Schnittstelle zulässt.

12. Kommunikationsgerät nach einem der vorherigen Ansprüche, **dadurch gekennzeichnet, dass** es ein geografisches Informationsmanagementmodul (102) umfasst, wobei das Modul gespeicherte Informationen enthält, die die Abdeckung der drahtlosen Internetzugangsnetze in der Nähe des Gerätes anzeigt, und Mittel zum Schätzen der geografischen Position des Gerätes umfasst.

13. Kommunikationsgerät nach Anspruch 12, **dadurch gekennzeichnet, dass** es ein GPS-Modul umfasst, mit dem seine geografische Position geschätzt werden kann.

14. Kommunikationsgerät nach einem der vorherigen Ansprüche, **dadurch gekennzeichnet, dass** es Mittel (104) zum Anzeigen von wenigstens einem Informationstyp umfasst, wie z.B.: Kommunikationskosten, gewähltes drahtloses Internetzugangsnetz und Menge an ausgetauschten Informationen.

15. Kommunikationsgerät nach einem der vorherigen Ansprüche, **dadurch gekennzeichnet, dass** es Mittel zum Verbinden mit einem drahtgebundenen Zugangsnetz umfasst.
